# EUROPEAN PATENT APPLICATION

(11) **EP 2 418 631 A1**
(43) Date of publication of application: **15.02.2012**
(21) Application number: 11176873.5
(22) Date of filing: 08.08.2011
(51) Int. Cl.: G08B 25/08, A01K 1/03, G08B 13/22

(54) **Improvements in or relating to an ambient temperature monitoring and alert device**

(30) Priority: 13.08.2010 GB 1013607; 28.04.2011 GB 1107194
(71) Applicant: Andrews, Richard, Rochester Kent ME2 4SN (GB)
(72) Inventor: Andrews, Richard, Rochester Kent ME2 4SN (GB)
(74) Representative: Hocking, Adrian Niall

(57) **Abstract**

An ambient temperature monitoring and alert device 10 is provided, for use with, for example, a dog cage 16. The device 10 comprises a casing attachable to an animal enclosure 16 to be monitored, a controller within said casing, said controller storing a preset temperature parameter, the controller having a user interface mounted in or on the casing, temperature sensing means connected to the controller for sensing an ambient temperature, alert means in communication with the controller and being operable to output a alert signal from the casing, and logging means operable to sequentially output second and response signals. The alert means and logging means are activatable in response to the preset temperature parameter being sensed by the temperature sensing means, thereby causing the logging means to output the monitoring signal. An identifier specific to the animal's carer is inputable via the user interface to cancel the alert signal, thereby causing the logging means to output the response signal.

The device 10 prompts the animal's carer to deactivate the alert signal. Activation and deactivation of the alert signal are logged using the logging means. Thus, historical data characteristic of the action taken by the animals' carer is recorded and may be used in legal proceedings should the animal suffer cruelty or neglect.

A method of monitoring the ambient temperature of an animal enclosure and raising an alarm when the ambient temperature meets the preset temperature range is also described.

## Description

The present invention relates to a device and method for monitoring ambient temperature in and around an animal enclosure such as a kennel and/or a cage, and providing an alert when the ambient temperature falls outside of a specified range.

In many circumstances, it is vital to ensure the ambient temperature remains within a particular range. One such example is the transportation of animals. Often, animals such as dogs, are transported from one location to another in cages or other enclosure in the back of vehicles including cars, vans and lorries. Should the temperature within the vehicle become too high, the animal is at risk of dehydration, heat stroke and hyperthermia, which can often lead to death. Similarly, should the temperature become too low, the animal is at risk of hypothermia, which may also lead to death.

It is possible to monitor the ambient temperature of the environment of the animal using a simple thermometer. Conventionally, the carer of the animal checks the thermometer at regular intervals. However, this is highly inconvenient for the carer, who may be driving the vehicle and thus needs to stop the vehicle periodically to read the thermometer. Should the carer become distracted, they may forget to check the thermometer regularly. Furthermore, should the ambient temperature change suddenly, the carer would be unaware of this until their next scheduled check. This potentially lengthens the time of their response to the temperature change, and places the animal at increased risk. Additionally, if the carer leaves the vehicle unattended, the ambient temperature may change sufficiently before the carer returns, thereby causing harm or death to the animal.

Temperature change alerts that monitor the temperature in real-time are known in the art. GB0709303 to Floyd discloses a temperature alert system that monitors the ambient temperature of a space containing an animal. When the temperature falls outside of a specified range, an alert is sent to the mobile phone or a key fob of the carer. Similarly, GB0223271 to Petrie discloses a temperature alert that signals when the ambient temperature of a space falls outside of a specified range, by activating an alert device that may be a mobile phone.

Whilst these devices are more effective at alerting a carer to a temperature change than a simple thermometer, they provide no incentive to the carer to adjust the ambient temperature immediately. The alerts may simply be deleted from the mobile phone memory and/or ignored, placing the animal in danger. No trace remains of the alert, and so no-one is accountable for the safety of the animal at the time of the alert.

It can be seen from the forgoing that a need has arisen for a temperature alert system that stores data characteristic of the alerts, which can be used to make the carer accountable for any action taken as a result of the alert and/or any harm that comes to the animal as a result of an ignored temperature alert.

It is therefore an object of the present invention to provide an ambient temperature monitoring and alert system achieving this.

According to a first aspect of the invention, there is provided an ambient temperature monitoring and alert device comprising a casing attachable to an animal enclosure to be monitored, a controller within said casing adapted to store a preset temperature parameter, a user interface in or on the casing, temperature sensing means connected to the controller for sensing an ambient temperature, alert means in communication with the controller operable to output an alert signal from the casing, and logging means including a solely third-party interrogatable data storage device and which is operable to sequentially output monitoring and response signals recordable by the said data storage device, the alert signal and the monitoring signal being outputable in response to the preset temperature parameter being met or exceeded by the temperature sensing means, the response signal being outputable and the alert signal being haltable only when a unique carer-specific identifier is inputted via the user interface.

The preset temperature parameter may be a temperature range. The casing is secured to the space to be monitored, for example, a dog kennel or cage. When the device senses that the preset temperature parameter is attained, the alert means is activated and the alert signal outputted. Data characteristic of the alert signal is outputted by the logging means as a monitoring signal to, and stored on a preferably remote central database. This data may be permanently stored and used as evidence should the carer not act on the alert signal and the animal come to harm. When the carer inputs a unique carer-specific cancelling identifier into the user interface, the alert signal is cancelled triggering a response signal to be outputted by the logging means to the said database. Thus, a record is created of when the alert signal was activated as well as when deactivation occurred and more importantly by whom. Using this data, it is possible to establish how long the carer took to respond to the alert signal and whether this delay is of an acceptable standard.

Preferable and/or optional features of the first aspect of the invention are set forth in dependent claims 2 to 23.

According to a second aspect of the invention, there is provided a method of monitoring the ambient temperature of an animal enclosure comprising the steps of: mounting an ambient temperature monitoring and alert device in accordance with the first aspect of the invention to an animal enclosure; monitoring the ambient temperature and comparing the ambient temperature against a preset temperature parameter stored by the ambient temperature monitoring and alert device; outputting an alert signal from the ambient temperature monitoring and alert device when the ambient temperature meets or exceeds the preset temperature parameter; outputting via logging means a monitoring signal to a solely third-party interrogatable data storage device; a carer cancelling the alert signal by entering a unique carer-specific identifier via a user interface of the ambient temperature monitoring and alert device; and outputting a response signal to the said data storage device in response to input of the said identifier.

Preferable and/or optional features of the second aspect of the invention are set forth in dependent claims 25 to 35.

For a better understanding of the present invention, and to show more clearly how it may be carried into effect, reference will now be made, by way of example only, to the accompanying drawings, in which:
Figure 1 shows a front perspective view of a first embodiment of an ambient temperature monitoring and alert device, in accordance with the invention;
Figure 2 shows the ambient temperature monitoring and alert device attached to a wire mesh animal cage;
Figure 3 shows a rear perspective view of the embodiment of Figure 1;
Figure 4 shows an exploded view of the embodiment of Figure 1;
Figure 5 shows an email and a text message alert outputted by the logging means to the carer when the logging means outputs the alert signal;
Figures 6 and 7 show part of a second embodiment of an ambient temperature monitoring and alert device, in accordance with the invention and showing a holder;
Figures 8 and 9 show the second embodiment of the ambient temperature monitoring and alert device being mounted to the holder, once the holder is engaged with an animal's cage;
Figure 10 shows the ambient temperature monitoring and alert device attached to a safety grill at the rear of a vehicle adapted for transporting animals; and
Figure 11 indicates the in use ambient temperature monitoring and alert device outputting an audible alert signal from within the vehicle of Figure 6.

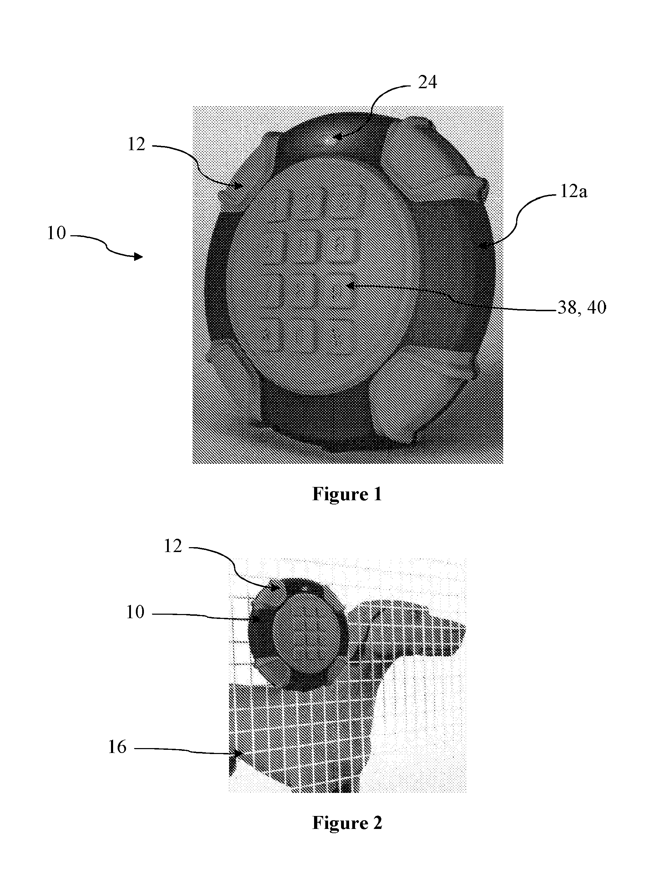

With reference firstly to Figures 1 to 4, a first embodiment of an ambient temperature monitoring and alert device is indicated generally at 10. The device 10 comprises casing 12 and electronic circuitry 14 within the casing 12.

The casing 12 is shown in the drawings as being a circular, injection-moulded housing, formed of two part-spherical portions, being front portion 12a and rear portion 12b, that are engageable together. However, the casing 12 may take any suitable shape and/or be formed of any suitable manufacturing process, as required. Preferably, a seal element is provided at the intersection of the front and rear portions 12a, 12b to protect the electronic circuitry 14 within from the ingress of moisture and particulate matter. The casing 12 should be formed of a rigid, durable material such that an animal cannot easily destroy or damage it. The casing 12 may be or include a plastics material, such as polypropylene, though any other suitable material may alternatively be used. Preferably, the casing 12 is made from a weather resistant material such that it may be used outdoors over a prolonged period of time without undue degradation.

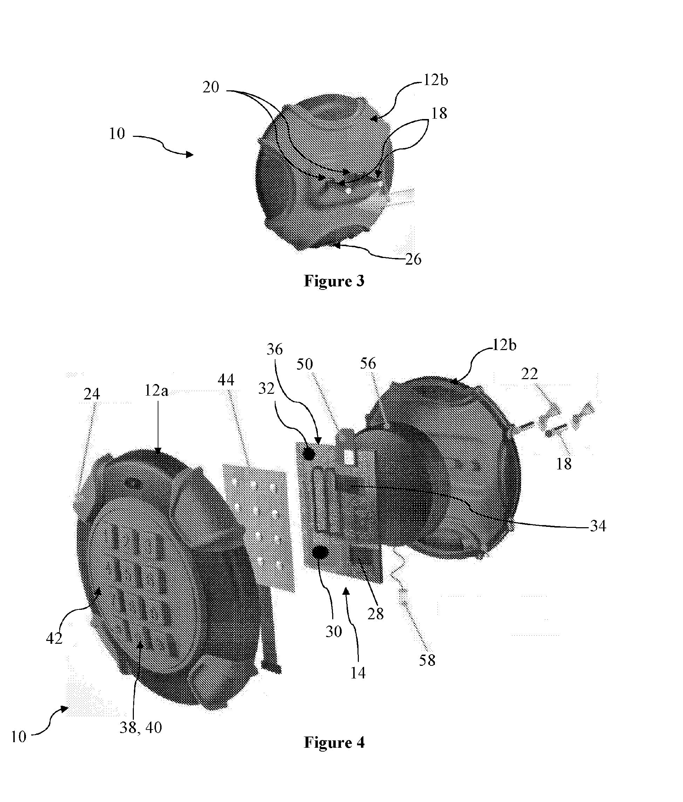

The casing 12 is attachable to a variety of different types of animal enclosures. For example, in Figure 2, the casing 12 is attached to a wire mesh animal cage 16. Two threaded pins 18 extend from the inside of the casing 12, and each pin passes through a corresponding aperture 20 in the rear portion 12b of the casing 12 so as to be accessible from outside of the casing 12. The pins 18 pass through the wire mesh of the cage 16, and, preferably quick release, fasteners 22 screw onto the pins 18 to hold the device 10 in place. As best seen in Figure 3, one such aperture 20 for one pin 18 may be horizontally wider than the other, such that the pin 18 may be slidably movable horizontally or substantially horizontally (as indicated by the Arrow in Fig. 3) and firmly held in position using the quick release fastener 22. The benefit of this arrangement is that it facilitates use of the device 10 on a range of wire mesh gauges and spacings.

Alternatively, the casing 12 may be adapted to attach to an animal enclosure by alternative suitable means, for example, a single fixing strap, hook or clip.

Preferably, the casing 12 comprises locking means to releasably secure the casing 12 to the animal enclosure. Advantageously, this helps to prevent theft of the device 10 from the animal enclosure. Furthermore, this renders the device 10 more resistant to tampering, for example by the animal's carer.

The casing 12 may support an LED 24 that remains lit when the device 10 is in use. However, the LED 24 is not essential and may be omitted.

The casing 12 further comprises a temperature sensor inlet 26. This is a small aperture or through-hole in the casing 12 allowing air from the space to be monitored to enter the device 10, such that it may be monitored by the electronic circuitry 14 within the casing 12.

The electronic circuitry 14 in this embodiment includes: an electronic controller 28 for storing a preset and/or presetable temperature parameter and/or a temperature range, temperature sensing means 30, alert means 32 and logging means 34.

The electronic circuitry 14 includes a printed circuit board 36, upon which are mounted a number of electronic components. For example, the controller 28 is mounted on the printed circuit board 36 and stores data corresponding to, preferably, a preset and/or presetable temperature and/or temperature range parameter(s). The temperature parameter is suggested as being around standard room temperature, typically between 19°C and 26°C, though this may be adjusted as deemed appropriate to the animal and the environment.

Alternatively or additionally, the controller 28 may store details of a minimum and/or a maximum temperature parameter. In such an arrangement, operation of alert means 32 and logging means 34, relating to output of a monitoring signal, occurs when the minimum and/or maximum temperature parameter is attained or exceeded, for example, when the ambient temperature drops below the minimum temperature and/or when the ambient temperature exceeds the maximum temperature.

The controller 28 also stores details of a unique carer-specific identifier which, when successfully inputted into the user interface, causes the controller to cancel a first alert signal outputted by the alert means 32. A user interface 38 interfaces with the controller 28 for the input of user commands. In this embodiment, the user interface 38 takes the form of a keypad 40 mounted on a front face 42 of the casing 12 and the said identifier is a personal identification number (PIN) or pass-code, which is inputable into the device 10 via the keypad 40. The keypad 40 is shown as being a numeric keypad, although other types of keypad may be used, for example, alphanumeric. Usage of the keypad 40 is discussed in more detail below. Other forms of identifier may be alternatively or additionally utilised, for example, biometric.

Instead of a keypad, any other suitable input device may be considered. For example, an RFID device, proximity card or fob can be considered.

The preset temperature parameter may be programmable into the controller 28 via the keypad 40. The temperature and/or temperature range parameter is preferably preset by a person or manufacturing process and is not settable by the carer. This limits the possibility of tampering. However, the parameter may be settable by the carer on use of their unique identifier, and this would preferably be outputted for logging by the logging means 34.

The controller 28 may be programmed to store a plurality of PINs, pass-codes or other unique carer-specific identifiers. In the present embodiment, a unique PIN, pass-code or other identifier is assigned to each carer. When the identifier is entered into the keypad 40, this event is recorded using the logging means 34. A response signal is outputable by the logging means 34 when the alert signal is successfully cancelled. The logging means 34 thereby logs which carer checked on the animal in response to the activation of the alert signal, thus making the carer accountable for the well-being of the animal resident within the animal enclosure.

Directly behind the keypad 40 in the casing 12 is a membrane keypad 44, which is in communication with the electronic circuitry 14 and the numeric keypad 40.

Alternatively or additionally, the user interface 38 may comprise a microphone for receiving sound, the microphone being connected to the controller 28. In such an arrangement, the identifier is or includes a pre-determined password. The pre-determined password is stored on the controller 28. When the correct password is detected by the controller 28 via the microphone, the alert signal is cancelled.

Alternatively or additionally, the user interface 38 may comprise an intercom device 10. In such an arrangement, the intercom device 10 is connected to the controller 28 and is in communication with a manned control station remote from the casing 12. In conversing with the manned control station, the animal's carer is able to obtain the unique carer-specific identifier required to cancel the alert signal, for example by inputting a security code issued by the manned control station into a keypad on the user interface. However, the security code may be inputted into the device 10 via a microphone, as explained above. When the security code is detected by the controller 28, the alert signal is cancelled. The arrangement is beneficial since it requires the confirmed presence of the animal's carer and reduces the risk that a personal identification code is memorised and used by someone other than the animal's carer.

Alternatively or additionally, the user interface 38 may comprise a visual display screen. In this way, the manned control station is able to visually confirm the presence of the animal's carer, thereby reducing the risk of negligence and animal neglect. Again, the manned control station may issue a security code which is then inputted by the animal's carer into a keypad on the user interface 38 to cancel the alert signal. Again, the security code may be inputted into the device 10 via a microphone, as explained previously.

The temperature sensing means 30 is connected to the controller 28. Such connection may be hard-wired or wireless. The temperature sensing means 30 may be any suitable type of temperature sensor, such as a thermocouple, a thermistor or a resistance temperature detector. Ambient temperature is sensed by the temperature sensing means 30, based on the air that enters the device 10 via the temperature sensor inlet 26 provided through the casing 12. The temperature data is fed back as a signal to the controller 28.

Optionally, the temperature sensing means 30 may be mounted on an external surface of the casing 12 for more accurate temperature detection. As such, the temperature sensor inlet 26 through the casing 12 may be omitted.

The alert means 32 is in communication with the controller 28 and is operable to emit a preferably visual and/or audible alert signal from the casing 12. The alert signal may include a vibratory output. To avoid distress to the animal in near proximity, the alert signal may be periodic rather than continuous. The alert signal may include random noise, or may include one or more pre-recorded spoken words in order to attract the attention of a passerby.

When the alert signal is audible, the alert means 32 comprises an audio alarm component connected to the controller 28. If the controller 28 detects that the ambient temperature meets the preset temperature parameter, the audio alarm component is activated. The audio alarm component may generate any noise as required, but the noise should preferably be loud enough that the carer can hear it whilst in a separate section of a vehicle, or is otherwise away from the animal by a reasonable distance. The audio alarm may interface with the vehicles in-car entertainment system, for example, via a wireless protocol link, such as Bluetooth RTM.

When the alert signal is visual, the alert means 32 comprises at least one light emitting element, for example, a light emitting diode, mounted on an exterior surface of the casing 12. Each light emitting element may be operable to emit light continuously or intermittently. Again, any visual alarm may interface with one or more cabin lights of the vehicle in order to more easily attract the carer's attention.

The logging means 34 includes a logging unit which is also mounted on the printed circuit board. The logging unit of the logging means 34 is operable to transmit a said monitoring signal and a said response signal to a, preferably remote central, database or other suitable storage device forming a further part of the logging means. The monitoring signal is outputted when the alert signal is activated. The database or other, preferably off-site, storage device then logs this monitoring signal. The monitoring signal preferably includes a device identifier enabling identification of the device in question. The data storage device is solely third-party interrogatable, thereby preventing or limiting the opportunity of tampering by the carer should an allegation of animal mistreatment be raised.

The response signal is only outputted when the alert signal is deactivated or cancelled by the carer. The database or other, preferably off-site, storage device then also logs this response signal in relation to this particular device. Optionally, the logging means 34 includes components that are substantially similar to the components found within a digital mobile telephone, for example, a radio transmitter, an antenna, a SIM card 50 and a GPS module.

The purpose of the central database is to log via the monitoring signal data pertaining to the alert signal, for example the location, date and time of activation and preferably temperature and duration, and also via the response signal the unique carer-specific identifier used to cancel the alert signal. Optionally, other data characteristics of the alert signal may be logged too. If a data storage device is utilised, rather than being a remote central database, a memory storage device may be disposed within the casing 12 or it may be located remote from the casing 12. In any event, the data storage device, whether it is onboard or a remote database or other storage means is not accessible by the carer, thereby allowing carer tracking.

Operation of the device 10 may be under the governance of event management software. In addition to data relating to the alert, monitoring, and response signals, the software may also store personnel data for each carer, for example, name, address, date of birth, and employee / identification number or data.

Using GPS, for example, the software may also track the position of each carer, whether on active duty or on standby. To complement this particular aspect of the software, provision may also be made for a full mapping package to guide another carer, or a response agency (for example, Police, and/or Animal Welfare Group), to the animal enclosure in the event that the allocated carer does not respond to an alert signal. Optionally, the mapping package may guide the other carer or the response agency to the allocated carer and/or animal, for example, to carry out first aid.

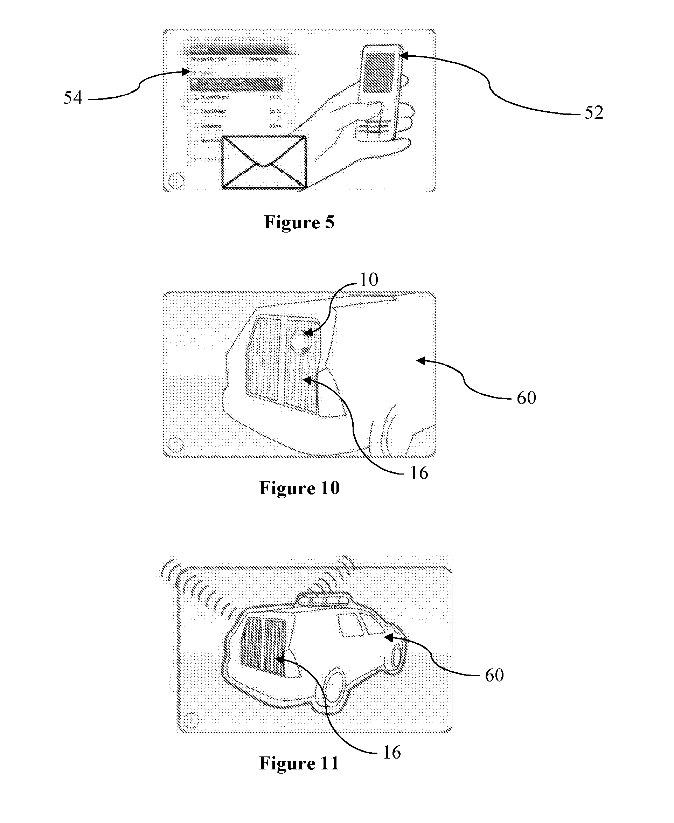

As indicated in Figure 5, the central database or other storage device may be configured to send a message, for example, a text message or an email, to a carer's mobile telephone 52 or computer 54 when the alert signal is outputted. Such a message may contain pre-programmed standard instructions, such as "Return to Vehicle", and/or one or more symbols indicating that the pre-set temperature parameter has not been reached (for example, green), that the pre-set temperature parameter is approaching (for example, amber), and that the per-set temperature parameter has been reached and/or exceeded (for example, red).

When the central database is located remotely of the housing, the logging means 34 comprises transmitting means to transmit the monitoring signal externally of the device. The transmitting means may have any one of the following communication or transmission protocols: radio frequency, Bluetooth RTM or Wi-Fi, although other suitable transmission protocols are envisaged.

The electronic circuitry 14 and/or controller 28 may be energised by an onboard power supply. In this arrangement, the onboard power supply takes the form of a battery 56. The battery 56 is ideally rechargeable, and may be a lithium ion battery or any other suitable rechargeable battery known in the art. Any other form of battery known in the art may be used instead. Additionally or alternatively, the device may be hard wired into the vehicle.

A power level indicator may be provided for indicating when the remaining charge in the battery drops below an acceptable level. The power level indicator is connected to the controller 28 on the printed circuit board and may be configured to issue a further alert when the remaining charge in the battery drops below the predetermined level. The further alert issued may be visual, audible or a combination of the two, and may be outputable to the central database or said other storage device whereby a maintenance and/or recharge procedure can be timely invoked.

If the device 10 is adapted to connect to the power supply of a vehicle, a DC power socket 58 or jack may be provided.

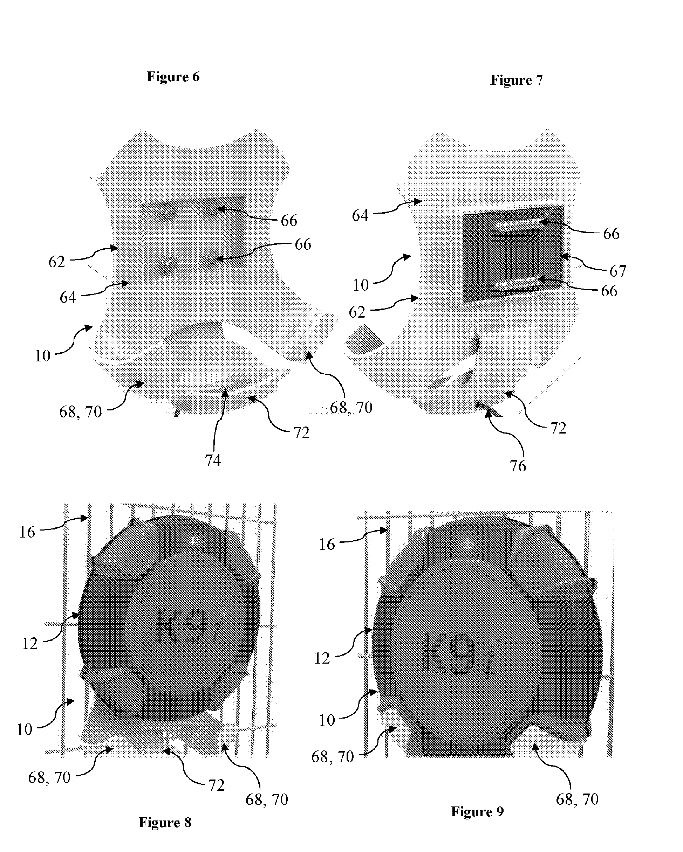

To this end, a second embodiment is envisaged as shown in Figures 6 to 9 of the drawings. Similar parts bear the same references as those of the first embodiment, and therefore further detailed description is omitted.

The device 10 again comprises the casing 12 and electronic circuitry 14 within the casing 12. However, in this case, a holder 62 in the form of a docking station is also provided which is engagable with an animal housing 16, for example, being a cage, pen or carrier.

The holder 62 includes a back portion 64 providing a mount for engagement with the animal housing 16. Engagement is achieved via one or more fasteners 66 preferably having a smooth or rounded projecting surface if extending into the animal housing 16, so that the animal cannot accidentally harm itself during contact therewith. A shock-absorbing element 67, in this case being a resiliently deformable, preferably rubber or elastomeric, pad, may also be provided to cushion the holder 62 against the surface of the animal housing 16.

A plurality of arms 68 extends from the back portion 64. In the embodiment shown, two lower arms 70 and a seat 72 project from a lower edge or region of the back portion 64. However, upper arms may also extend from an upper edge or region of the back portion 64.

The arms 70 and seat 72 have a preferably arcuate longitudinal extent which is suitable for extending around an edge of the casing 12 and onto a front surface of the casing 12. Consequently, once seated on the holder, the casing 12 is firmly held but can be lifted out of engagement with the holder 62.

Preferably, a charging element 74 is provided in at least one of the arms 70 or, as in this case, the seat 72. The charging element 74 may be an inductive charging element which wirelessly cooperates with a similar element on the casing 12. However, the charging element may be male and female counterpart contacts which physically engage to form electrical communication between the holder 62 and the casing 12.

The charging element 74 of the holder 62 is preferably connected to a power supply 76 of the vehicle or a mains power supply if available.

The casing has been shown in the first embodiment as being wholly mountable to an animal enclosure. The second embodiment envisages that the casing 12 may take the form of a portable control unit and a docking station, with the portable control unit being releasably connectable to the docking station. In such an arrangement, the portable control unit may contain the electronic circuitry 14 described previously, with the possible exception of the onboard power supply, which may be housed within the docking station. Typically, the docking station would be retained on the animal enclosure over an extended period of time, or may be integrally and/or permanently formed as part of the enclosure, whereas the portable control unit would be removable when the animal enclosure was unoccupied and no longer in use. The benefit of having the connection means as a docking station would be to provide a safe way of connecting the portable control unit to the enclosure, with little or no risk of injury to the animal by sharp or pointed projecting connection means, such as the pin arrangement described previously, extending into the enclosure.

In use, as shown in Figure 10, the ambient temperature monitoring device 10 is mounted to the animal enclosure to be monitored, for example, towards the rear of a vehicle 60. This is either directly via the casing, or via the holder. As shown in Figure 11, when the controller 28 receives a temperature signal from the temperature sensing means 30 equal to or in excess of the preset parameter, thereby indicating that the ambient temperature has increased or decreased too much, the controller 28 activates the alert means 32 and the logging means 34 to output the alert signal and the monitoring signal.

Preferably, the carer is alerted by the alert signal, and/or the further alert outputted by the central database or other storage device, for example, via text message and/or e-mail.

When the carer enters their unique carer-specific identifier, typically via the keypad 40, the controller 28 deactivates the alert signal. This triggers the output of the response signal to the central database or other storage device. As such, the carer must be present at the device 10 before deactivation can occur, ensuring that they have checked the well-being of the animal in person. By virtue of the response signal, the complete historical event is stored on the central database, for potential use as evidence in the case of an animal cruelty or neglect allegation and/or legal trial. Simply knowing that this data will be stored may thus act as an incentive for carers to provide adequate animal care.

The device 10 is advantageous as it can be used to hold the specific carer of an animal at any given time accountable for the welfare of that animal housed in an animal enclosure. The device 10 generates historical data and a traceable record relating to the activation and deactivation of the device. The alert data can be used to support a charge against the carer of animal cruelty, neglect and/or maltreatment. The device and method of use is particularly beneficial for working animals, such as police and security dogs, which are often transported between locations and may be left unattended within a vehicle for extended periods of time and in various seasonal conditions.

The embodiments described above are provided by way of example only, and various changes and modifications will be apparent to persons skilled in the art without departing from the scope of the present invention as defined by the appended claims.

## Claims

1. An ambient temperature monitoring and alert device comprising a casing attachable to an animal enclosure to be monitored, a controller within said casing adapted to store a preset temperature parameter, a user interface in or on the casing, temperature sensing means connected to the controller for sensing an ambient temperature, alert means in communication with the controller operable to output an alert signal from the casing, and logging means including a solely third-party interrogatable data storage device and which is operable to sequentially output monitoring and response signals recordable by the said data storage device, the alert signal and the monitoring signal being outputable in response to the preset temperature parameter being met or exceeded by the temperature sensing means, the response signal being outputable and the alert signal being haltable only when a unique carer-specific identifier is inputted via the user interface.

2. An ambient temperature monitoring and alert device as claimed in claim 1, wherein the logging means comprises a central database for logging date and time data characteristic of the alert signal.

3. An ambient temperature monitoring and alert device as claimed in claim 2, wherein the central database is disposed within the casing.

4. An ambient temperature monitoring and alert device as claimed in claim 2, wherein the central database is disposed remote from the casing.

5. An ambient temperature monitoring and alert device as claimed in any one of the preceding claims, wherein the preset temperature parameter is a temperature range, the alert means and the logging means being activated when the ambient temperature falls outside the said temperature range.

6. An ambient temperature monitoring and alert device as claimed in any one of the preceding claims, wherein the user interface comprises at least one of a key pad, an RFID element, a remote fob and a microphone.

7. An ambient temperature monitoring and alert device as claimed in claim 6, wherein the identifier is a personal identification number or code.

8. An ambient temperature monitoring and alert device as claimed in any one of the preceding claims, wherein the user interface is formed as part of an intercom system being communicable with a manned control station remote from the housing.

9. An ambient temperature monitoring and alert device as claimed in any one of the preceding claims, further comprising an onboard power supply for energizing the controller.

10. An ambient temperature monitoring and alert device as claimed in claim 9, wherein the onboard power supply is energisable by a power supply of a vehicle.

11. An ambient temperature monitoring and alert device as claimed in any one of the preceding claims, further comprising a carrier for releasably securing the casing to the animal enclosure.

12. A method of monitoring the ambient temperature of an animal enclosure comprising the steps of:
a. Mounting an ambient temperature monitoring and alert device as claimed in any one of the preceding claims to an animal enclosure;
b. Monitoring the ambient temperature and comparing the ambient temperature against a preset temperature parameter stored by the ambient temperature monitoring and alert device;
c. Outputting an alert signal from the ambient temperature monitoring and alert device when the ambient temperature meets or exceeds the preset temperature parameter;
d. Outputting via logging means a monitoring signal to a solely third-party interrogatable data storage device ;
e. A carer cancelling the alert signal by entering a unique carer-specific identifier via a user interface of the ambient temperature monitoring and alert device; and
f. Outputting a response signal to the said data storage device in response to input of the said identifier.

13. A method as claimed in claim 12, further comprising the step of: releasably securing a casing of the ambient temperature monitoring and alert device to the animal enclosure via a carrier.

14. A method as claimed in claim 12 or claim 13, wherein the logging means transmits the monitoring signal to a central database remote from the housing.

15. A method as claimed in any one of claims 12 to 14, wherein the preset temperature parameter is a temperature range, the alert means being activated when the ambient temperature falls outside the said temperature range.
